# EUROPEAN PATENT APPLICATION

(11) **EP 1 880 833 A1**
(43) Date of publication of application: **23.01.2008**
(21) Application number: 06076443.8
(22) Date of filing: 19.07.2006
(51) Int. Cl.: B29C 70/34, B29C 70/44, B29C 70/48, B29D 31/00, B29C 70/02

(54) **Composite articles comprising in-situ-polymerisable thermoplastic material and processes for their construction**

(71) Applicant: National University of Ireland, Galway, Galway (IE); EireComposites Teoranta, Spiddal, Galway (IE); University of Limerick, Limerick (IE)
(72) Inventor: Doyle, Adrian, Doughiska, Galway (IE); Lee, James, An Cheathru Rua, Galway (IE); Archer, Edward, County Antrim BT37 0QG Northern Ireland (GB); Doyle, Keith, Roscommon (IE); Feerick, Patrick, Tuam, County Galway (IE); Coll, Siora, Roscommon (IE); O Bradaigh, Conchur, Castlegar, Galway (IE); Murtagh, Adrian, Tuam, County Galway (IE); Mallon, Patrick, Limerick (IE); Stanley, Walter, c/o University of Limerick, Plassey Technology Limerick (IE)
(74) Representative: Lane, Cathal Michael

(57) **Abstract**

A process for the manufacture of a composite article is described wherein the process comprises the steps of (i) providing on a tool (22) a fibrous material (14) having associated therewith in at least one region thereof an in-situ polymerisable non- fibrous form of a thermoplastic material; (ii) applying heat and a vacuum to said material; and additionally (iii) drawing into the fibrous material (14), from a source external to the tool, additional thermoplastic pre-polymer material. The process described is particularly useful for the manufacture of a large composite structure such as thermoplastic composite wind turbine blade, for example.

## Description

### Field of the Invention

The present invention relates to composite articles such as structural articles or elements and composite materials and processes for their construction. In particular the present invention relates to larger structural elements or articles of manufacture which are generally considered more difficult to manufacture than smaller structural elements.

### Background to the Invention

In the context of the present invention larger structural elements or objects are of particular interest though the present invention is not limited to those and can be employed for smaller objects. The composite articles, the materials for their production and processes of the invention may be employed in addition to or in full or part substitution for prior art composite articles, materials for their manufacture and processes for their manufacture. The terms structural element, composite article, and the like thus include all articles constructed of composite materials.

In the present invention the terms "large" or "larger" as applied to the composite articles relates to those articles or elements which are of a size that prior art techniques would normally construct in parts or sections. For example, above a certain size, sections of the article are generally constructed separately for later joining together and the integrity of the article is usually compromised along each join between the sections. Generally composite materials are constructed of components which combine to produce structural or functional properties not present in any individual component. For many applications it is the strength of the composite material which makes it an attractive material to employ. Compromising that strength makes the composite less suitable for its intended end-use. Typically such large or larger composite articles have at least one dimension (often times length) which is 5 metres or greater, for example 10 metres or greater, such as 15 metres or greater. With the present invention those large composite articles can be made without any distinct joint. With the present invention it is possible to create articles at least one dimension (often times length) which is 20, 25, 30, 35, 40, 45, 50, 55, 60, 65, 70, 75, 80 or 85 metres or greater.

Articles made from composite materials include, building elements, vehicle elements such as automobile panels and structures, marine elements such as boat hulls, aircraft elements such as wings and control surfaces, sports equipment such as racquets and bats. All of these articles can be manufactured using the composites of the present invention and by the processes of the present invention.

There are many large articles made of composite materials and many end-use applications for those articles. Large composite articles include boat hulls and structures for offshore oil exploitation, truck trailers, large transport enclosures or containers, aeroplane fuselages or sections thereof and wind turbine nacelles and spinners. Of particular interest within the present invention are blades which are suitable for use with wind power, generally those of the type which are employed to convert natural wind energy into sufficient rotational energy to drive a turbine. Such blades are shaped to capture natural wind energy and generate a rotational movement from the natural wind energy. The rotational motion is used to drive a generator which in turn generates electricity. The blades are generally foils which translate kinetic wind energy into mechanical energy. Such blades are often referred to as wind turbine blades.

Large composite articles such as large wind turbine blades have generally been made from one of three processes: hand layup; pre-impregnated tape layup; and some form of liquid resin infusion process into a dry fibre and core preform. A turbine blade as used herein refers to one of a number of blades forming part of a rotor. In general the rotor will comprise a hub to which the, or each, blade is attached. The hub will generally be attachable to a mounting shaft through which rotational motion of the rotor is transmittable to a turbine, usually via a hub cap or spinner.

Generally, a turbine blade is made in two (concave) shell halves which overfit (with the concave surfaces facing each other), with a structural support such as a spar-box or spars in the cavity between the two fitted together halves. This gives bending strength to the blade. A lightweight core is used to reduce the weight of the aerodynamic surfaces, while retaining sufficient buckling strengths during blade bending. Suitable core materials include plastics materials, in particular lightweight plastics such as PVC or polyurethane structural foams, wood such as balsa wood or other woods such as larch. In the hub section of the blade, i.e. where the blade connects to the hub, the entire thickness of the section is made of a monolithic laminate, usually glass-fibre reinforced, but in some cases using carbon fibre, or hybrids of glass fibre and carbon fibre. Basalt fibres are cost-effective as fibre reinforcements and have also been investigated as possible candidates for reinforcement of large structures instead of glass fibre, or with glass fibre. The hub section carries very large loads during turbine operation, including the loads from the bolts, which attach the blade to the rotating turbine spinner. For blades larger than 40m in length, the thickness of this hub section can be between 100mm and 150mm.

The most basic method of production of a large composite structure is to use hand lay-up of glass fibre and uncured thermoset resins such as epoxy and polyester. This involves the manual application of alternating layers of glass fibre and resin, with brushes and rollers being used to manually apply some pressure to the layup in order to remove air pockets and to ensure that the resin has infiltrated the reinforcement. The main advantage of this process is that it is inexpensive, as there is no sophisticated equipment needed. The blade tooling can be unheated, or possibly heated, for example up to 50⁰C, in order to initiate the curing reaction. The main disadvantage of the hand layup process is that it is dirty and difficult to control laminate quality. There are significant health and safety issues associated with the use of uncured resins in the workplace (see below). In general, this type of process for large composite structures is gradually being replaced by the liquid resin infusion processes described below.

The use of pre-impregnated tape is a more advanced manufacturing process than hand lay-up. In wind turbine blades the tape is usually of glass fibre reinforced epoxy, but carbon fibre reinforced epoxy may also be used in spars in particular. The tape is laid up by hand, or automatically laid-up onto a tool having the shape of one half section of the shell of the blade. The entire layup is then encapsulated in a vacuum bag and the air evacuated. The tool is then heated in order to cure the resin, normally to a temperature above 100⁰C, for a number of hours, which could be between 4 and 8 hours, depending on the size of the blade. The same operation is carried out with the other half section of the shell of the blade on a separate tool. The spar is made on a third tool, separate from the half sections of the shell of the blade.

However, there are difficulties associated with the manufacture of wind turbine blades from pre-impregnated tape which are largely due to the inflexibility of the process, the long cure cycles associated with the cure of the resin, the necessity to heat the tool, and the health and safety issues associated with manual handling of the tape and partially-cured epoxies (see below).

In the case of the liquid resin infusion processes, the principle is to use a dry glass-fabric or other reinforcement on its own, or to encapsulate the lightweight core. The layup is then enclosed under a vacuum bag, against the tool surface. Uncured, catalysed resin, usually a polyester resin, is then drawn into the reinforcement by means of applying a differential pressure or vacuum across the flow length of the blade half. Uncured vinylester resins may also be used to infiltrate composites using the liquid resin infusion process. Generally, the pressure available to cause the resin to flow into the reinforcement is limited to 1 bar, or that caused by the difference between atmospheric pressure and the vacuum pressure that can be exerted under the bag.

The main advantage of liquid resin infusion is that it is easier to handle the glass and carbon fibre reinforcements in the dry form than in pre-impregnated tape form. Furthermore, it is more cost effective for the manufacturer to directly add the resin to the reinforcement rather than pay for the extra step of impregnating the fibres in advance, and the added cost of storing the pre-impregnated materials in freezers.

The general problems encountered by manufacturers of large structures using liquid resin infusion are those of quality. It can be quite difficult to ensure that the pre-mixed, pre-catalysed resin, usually polyester or vinylester, satisfactorily flows through the entire fibre reinforcement without leaving any dry spots or excessive voids. This is particularly difficult with the larger blades, as the flow paths can be as long as 50 metres, and vary in thickness from the 100-150mm at the hub end, to long sections in the fairings which are as thin as 1 to 2 mm.

It is well known to use multiple flow injection points so as to minimise the flow lengths. It is also well known to use various types of low permeability, flow-enhancing fabrics to aid in areal flow. Several techniques for inserting flow-channels in the lightweight core and in the vacuum bag itself have also been used.

In general, it is beneficial to be able to maximise the fibre volume fraction of the composite, as this leads to increased static strength and stiffness, which is an important benefit in blade design. Glass fibre volume fractions of approximately 60% would be optimum. Due to the flow quality problems inherent in thermoset resin liquid infusion processes, the industry standard is to use between 50% and 55% glass fibre by volume, as this is an easier fibre pre-form to inject resin through. The pre-impregnated tape process outlined above can reliably produce structures with approximately 60% fibre volume fraction, as the thermoset resin has already been placed in-situ between the fibres and hence has only to compact and consolidate rather than flow over long distances.

Thermosetting resins undergo an exothermic chemical reaction when curing which generates heat internally in the resin. In some cases, a heated tool is needed in order to initiate the reaction, but some reactions can be carried out on an unheated tool. In thick laminates (greater than 50mm) this heat of reaction can cause the interior temperature of the laminate to rise above the temperature of the tool, and can degrade the interior of the laminate. It is therefore necessary to slowly cure thick composite structures such as those found in large wind turbine blades.

The resin chemistry can be altered in order to retard the kinetics of the reaction, which leads to the cure being achieved over a longer period of time. This allows the heat generated to dissipate without excessively raising the temperature of these thick composite sections. Alternatively, the wind turbine blade tool can be heated to a lower temperature for cure, which can achieve the same result over a longer period of time. The overall processing cycle time of large thermoset composite wind turbine blades is greatly increased by the slow curing necessary in order to prevent exothermic damage to thick sections of the blades.

Whether the blade is manufactured using hand layup, pre-impregnated tape or a liquid resin infusion process, the blade is generally made in two elongate half sections. Generally each half section is concave in shape such that each half section fits over the other with the concave surfaces facing each other. The spar, or spar webs are made on a third mould. The entire assembly is then adhesively bonded in an extra operation, a process which can be complex and time-consuming.

In all, the entire process, including part manufacture and adhesive bonding, can take between 24 hours and 36 hours to fully produce a large, e.g. >40m long, wind turbine blade from thermoset resins.

EP 1 310 351 B1 of Siemens AG and corresponding US 2003/0116262 A1 (assignee Bonus Energy A/S) describe a method for producing a thermoset composite wind turbine blade as a single moulding, using a liquid resin infusion process. In this process the reinforcing fibrous materials together with core materials used to produce sandwich structures are placed in the closed mould. Subsequently the liquid resin is infused into the fibrous materials through the application of a vacuum. In one embodiment of the process described in EP 1 310 351 thermoset prepreg material is placed in high load bearing sections of the blade to take advantage of the high fibre volume fraction that these prepreg materials provide. The remaining dry fibrous materials which constitute the greater part of the blade are infused with the liquid resin under the application of vacuum. Specially-constructed mould cores that have a flexible external part and a firm, or workable interior, are left in the mould during infiltration and cure, and then removed afterwards. The cores must be left in place during processing as the resin infiltration process described necessitates a reduction in vacuum pressure during infiltration. As vacuum pressure is the only external force acting to support the composite layup during processing, the cores must be left in place to stop the assembly collapsing due to the weight of the material.

The use of a one-shot process avoids the need for adhesive bonding and assembly of halves and spars. This one-shot process leads to a weight reduction in the blade as the adhesive and gap filler materials are not needed. The process cycle time is also reduced due to a number of manufacturing and assembly steps being removed. One-shot processing of wind turbine blades is also advantageous in that it is possible to achieve a better moulded definition of the trailing edge of the blade, giving better aerodynamics and much lower noise from the operation of the turbines.

It is not a simple process, however, to liquid infuse a large thermoset composite wind turbine blade in a single-shot. EP 1 310 351 B1 and US 2003/0116262 A1 describe an intricate system of resin supply pipes which are used to distribute the many tonnes of resin through the sandwich core of the laminate. Difficulties arise with infiltration of the thick-section solid laminate areas of the blade, for example the spar-caps and hub sections. EP 1 310 351 B1 and US 2003/0116262 A1 disclose methods of pre-placing thermoset pre-preg in these areas, that are then fully infiltrated by the resin infusion process. However, the process described still necessitates the storage, cutting and manual handling of uncured thermoset prepregs. The health and safety issues associated with the use of thermoset prepregs, together with the cost of such materials, will be appreciated by those skilled in the art and are described below.

In general, there are a number of health and safety problems facing producers of large thermoset composite structures. Chief among these is the issue of Volatile Organic Compounds (VOCs) in the workplace. The curing of thermoset resins such as polyester, vinylester and epoxy invariably leads to emissions of VOCs into the workplace.

The most regulated VOC is styrene, a known carcinogen, and emission standards and allowable levels of styrene in the workplace are being gradually reduced by regulation. The allowable levels of styrene in the workplace have been reduced to as low as 10-50 parts per million in some countries. This level is extremely hard to reach with a simple process such as hand layup, and inevitably manufacturers using this process are forced to invest in expensive air handling and treatment equipment. Liquid resin infusion processes greatly reduce the level of VOCs emitted, as the fibre layup is now enclosed fully in a vacuum bag, however, some VOCs will be emitted from spillages, resin storage and mixing etc.

The second health and safety problem is associated with the handling of uncured epoxy prepregs. It is known that exposure among workers to such materials can cause contact skin dermatitis, and in some countries (e.g. Sweden) these processes have been prohibited.

Producers of large thermoset composite structures such as wind turbine blades also face major problems in disposing of waste materials from the factory. Uncured glass-reinforced polyester and epoxy materials have been banned from disposal to landfill by a recent European Union directive. It is estimated that up to 10% of the pre-impregnated tape used by wind turbine blade producers is disposed of as waste.

Furthermore, once a large thermoset composite structure has been cured, there is no available method of re-working the structure in the case of quality problems, therefore a certain percentage of large blades have to be chopped up and either landfilled or incinerated. The problem is that thermoset composites cannot be re-processed or recycled. The same issue occurs with wind turbine blades at their end of life, when they must be disposed of, rather than recycled.

Other materials which may be used as matrix materials in the manufacture of fibre reinforced composite structures include thermoplastic polymers. There are many advantages to the use of thermoplastic polymers as matrix materials for composite structures. Thermoplastic polymers are tougher than thermoset resins and this gives thermoplastic composite materials better damage tolerance. In the case of large wind turbine blades, higher material toughness would mean that the blade section thickness can be reduced which can lead to lighter blades. Semi-crystalline thermoplastic polymers also have better chemical resistance than thermoset resins, which would improve the environmental resistance of blades.

U.S. Patent no. 6,369,157 of Winckler et al.*,* (Cyclics Corporation, assignees) describes a thermoplastic material comprising a blend of a macrocyclic polyester oligomer and a polymerization catalyst as a one component ready-to-use material having a long shelf life. It describes cyclic poly(1,4-butylene terephthalate) (CBT) and a process for its manufacture. The patent also describes processes which use the blend material which include, *inter alia,* rotational moulding, resin transfer moulding and powder-coated or hot-melt prepreg and which processes may be used to make polyester polymer composites which may be included in articles of manufacture. However, there is no teaching or suggestion of a process for the manufacture of large composite articles such as large wind turbine blades made from thermoplastic composites. Such construction is difficult because of the difficulties involved in producing a fully infiltrated and polymerised large composite structure.

There is therefore a need for an improved process for the construction of a fully infiltrated and polymerised large thermoplastic composite having a desirable high fibre volume fraction and the required composite properties.

It is therefore an object of the present invention to provide improved composite articles and a process for their construction. It is a further object of the invention to provide an improved wind turbine blade and a process for its manufacture.

### Summary of the Invention

Accordingly, the invention provides a process for the manufacture of a composite article, the process comprising the steps of:
(i) providing on a tool a fibrous material having associated therewith in at least one region thereof an in-situ polymerisable non-fibrous form of a thermoplastic material;
(ii) applying heat and a vacuum to said material; and additionally
(iii) drawing into the fibrous material, from a source external to the tool, additional thermoplastic pre-polymer material.

The fibrous material will generally be substantially unimpregnated with resin prior to the application of heat. It will generally act as the reinforcement material. Suitably, the non-fibrous form of a thermoplastic material is dispersed on the fibrous material. The non-fibrous thermoplastic material will act as the matrix material, to surround and support the fibrous (reinforcement) material. The fibrous material will not generally melt on application of heat and/or vacuum and will remain substantially as it was before impregnation with the thermoplastic material.

The in-situ polymerisable non-fibrous form of thermoplastic material desirably comprises liquid, powder or pellets.

The process according to the invention may be considered as an integrated process wherein distinct melt fronts are formed. In one embodiment two melt fronts are formed. One melt front may be formed by the thermoplastic material dispersed on the fibrous material. A second melt front may be formed by the additional thermoplastic pre-polymer material that is drawn into the fibrous material. Suitably the additional thermoplastic pre-polymer material is drawn into the fibrous material by vacuum. Each melt front simultaneously infiltrates the fibrous material and meets at an interface to form a fully infiltrated and polymerised composite structure. The use of liquid thermoplastics enables composites having high fibre volume fractions but with desirable composite properties to be reliably achieved.

Thermoplastics are also thermoformable which means that sections of a blade, for example, which comprises thermoplastic material can be heated and reshaped, unlike thermoset materials which cannot be re-softened, once they have been cured. It is also possible to weld thermoplastic polymers and composites together by the application of heat locally at a joint. Unlike other materials which may be joined only through using a connecting material such as adhesive, the thermoplastic material can be coalesced to form a joined structure without any joint line. This property of thermoplastics affords the opportunity to weld two or more sections of a blade together, and avoids having to use joining materials which add substantial weight to thermoset blades.

Thermoplastic polymers have a long shelf life at room temperature. This avoids the cost of the low temperature storage which is necessary for thermoset materials.

Suitably the tool used in the process according to the invention comprises a mould. Suitably the mould or a portion thereof, has the shape of the article or at least part of the article to be produced.

Preferably the material used in step (iii) comprises an in-situ polymerisable thermoplastic material. The term "in-situ polymerisable" means that the thermoplastic material can be polymerised once in the desired location.

The in-situ polymerisable thermoplastic material is suitably selected from the group consisting of pre-polymers of:
polybutylene terephthalate (PBT), polyamide-6 (pre-polymer is caprolactam), polyamide-12 (pre-polymer is laurolactam) alloys of polyamide-6 and polyamide-12; polyurethanes (TPU), polymethylmethacrylate (PMMA), polyethylene terephthalate (PET), polycarbonate (PC), polyetheretherketone (PEEK), polyetherketone (PEK), polyethersulfone (PES), polyphenylenesulphide (PPS), polyethylenenaphthalate (PEN) and polybutylenenaphthalate (PBN) and/or combinations thereof.

Preferably, the in-situ polymerisable thermoplastic material comprises cyclic poly(1,4-butylene terephthalate) (CBT).

Cyclic poly(1,4-butylene terephthalate) (CBT) is an activated macrocyclic polyester oligomer, which when polymerised forms a PBT polymer such as described in many patents by Cyclics Corporation including, U.S. patent no. 6,369,157.

Thermoplastic pre-polymers such as CBT have water-like viscosity which facilitates the use of resin infusion processes for a thermoplastic material. Furthermore there is no heat released during the chemical reaction. This allows very thick thermoplastic composite sections to be moulded in very short cycle times. In contrast, thermoset materials have an exothermic reaction which means that the curing cycle must be extremely slow to avoid overheating and thermal damage to thick sections of the structure.

Further preferably, the in-situ polymerisable thermoplastic material used in step (i) comprises one-part CBT system and in step (iii) comprises a two-part CBT system.

A one-part system suitably comprises a stabilised premix of resin and catalyst which is activated for cure e.g. by heating. A two-part system suitably comprises a system wherein the resin and catalyst are held separately and generally mixed only immediately prior to use.

CBT is available from Cyclics Corporation of Schenectady, NY, USA in either one-part or two-part systems which adds flexibility to the processing of this material. A one-part CBT system generally comprises a blend of CBT together with a polymerisation catalyst. This is desirably in one-part solid form. The advantage of this one-part system is that it is not necessary to carry out a separate mixing step for the addition of catalyst. The two-part system generally comprises a macrocyclic polyester oligomer (Cyclic poly(1,4-butylene terephthalate)) and a separate catalyst. Generally this system is activated by heating the macrocyclic polyester oligomer to temperatures in the range 150-160°C at which point the oligomer melts to form a low viscosity liquid. A suitable catalyst is added to initiate the polymerisation reaction. Intermediate materials comprising the one-part CBT system are available in the form of pre-impregnated glass or carbon fabrics. This adds to the flexibility of the processing methods.

The one part CBT (resin and catalyst premix) requires a heating rate of approximately 10°C per minute or higher to ensure that polymerisation can complete without being hindered by concurrent crystallisation. This feature of the one part system restricts the manufacture of thick composite sections containing the one part CBT material due to a relatively slow heat transfer rate through the thick composite section. However, thick composite sections can be processed successfully using the resin infusion process with the two part (resin and catalyst are separate) CBT system.

Suitably, in the two-part system, the resin is heated to a temperature suitable to allow for infusion into the fibrous material. A catalyst is added to the heated resin and thoroughly mixed with the resin, prior to drawing it into the fibrous material.

The present invention therefore provides an improved process for the manufacture of composite structures, such as wind turbine blades that have large variations in thickness. These can be formed by impregnating the fibre with suitable forms of non-fibrous thermoplastic materials such as CBT materials and in particular different forms thereof.

In a preferred embodiment of the present invention the resin infusion process is integrated with the process of placing the one part CBT system within the fibrous material to manufacture a composite structure such as a wind turbine blade in a one stage process.

One of the advantages of using CBT is that no Volatile Organic Compounds (VOCs) are released during the CBT polymerisation process, in contrast to the widely used thermoset curing reactions in current use. The use of thermoplastic materials results in no toxic emissions being produced during the manufacturing process thereby improving workplace safety. Furthermore, there are no known health and safety issues relating to the handling or processing of the material, apart from the higher (c.200 degrees Centigrade) processing temperature of the material, as compared to existing thermoset processes.

The fibrous material may comprise glass fibre, basalt fibre, carbon fibre or metal fibre.

Suitably the fibrous material comprises a first portion and a second portion. The first portion may comprise a pre-impregnated or pre-deposited fibrous material.

The term pre-impregnated means a fibrous material which has been impregnated with resin material, such as in-situ polymerisable thermoplastic material, for example, prior to laying up in a mould. The resin is generally in-situ between the fibres. The term pre-deposited means a fibrous material on which resin material has been deposited, such as in-situ polymerisable thermoplastic material, for example, prior to laying up in a mould. The resin in this case may be on top of or on one side only of the fibres. The term "pre-impregnated material" should be taken to also include the pre-deposited material, and materials of these types may be referred to as pre-pregs.

The second portion of said fibrous material may comprise a fibre preform. Fibre preform is a term used in the trade for a structure comprising dry glass and/or other fibre that can be placed in a mould prior to liquid resin infusion. A fibre preform can have different weave styles in different layers.

Preferably the fibre preform comprises dry glass fibre or carbon fibre. The fibre preform differs from pre-impregnated fibrous material in that there is no resin material provided between or on the fibres prior to use. Resin material such as thermoplastic pre-polymer can be added to the fibre preform after it is laid up in a mould.

The process according to the invention provides an efficient process for the manufacture of a composite article which may suitably have only one concurrent cure/infiltration process.

In a preferred embodiment the invention provides a process for the manufacture of a composite article such as a wind-turbine blade, the process comprising the steps of
(i) providing a tool for forming a first and second portion of the article;
(ii) providing a first layer comprising fibrous material on the tool;
(iii) adding in-situ polymerisable non-fibrous thermoplastic material as appropriate to said fibrous material and optionally repeating steps (ii) and
(iii) to build up a desired lay-up of said first portion of the article;
(iv) providing a fibre preform adjacent said fibrous material;
(v) repeating steps (ii) to (iv) to form a desired lay-up of said second portion of said article;
(vi) placing the lay-up of said first portion of the article adjacent to the lay-up of the second portion of said article;
(vii) applying heat and a vacuum to said tool; and additionally drawing into the fibrous material, from a source external to the tool, additional thermoplastic pre-polymer material; and
(viii) maintaining sufficient heat and vacuum in said tool for a period of time sufficient to form a composite article.

Suitably the tool and composite components are allowed to cool in a controlled manner. The controlled cooling prevents damage to the structural integrity of the component due to cooling which is either too rapid or too slow.

Suitably the process further comprises the step of encapsulating said first and second portions of the article in a vacuum bag prior to applying heat and a vacuum to said tool.

Suitably the fibrous material comprises glass fibre, basalt fibre, carbon fibre or metal fibres.

Preferably the fibrous material comprises glass fibre. It will be appreciated by those skilled in the art that glass fibre is a less expensive material compared to carbon fibre. The invention therefore provides an economical process which provides greater production efficiency and lower manufacturing costs.

Further preferably the fibre preform comprises dry glass, basalt, carbon fibre or metal fibres or combinations thereof.

Preferably step (iii) of the process according to a preferred embodiment comprises dispersing the one-part CBT powder on the glass fibre in an amount effective to yield fibre volume fractions between 20% and 70%.

Suitably the tool is heated to a temperature in the range 170-450°C. The CBT material polymerises to form PBT at the mould temperature of 170°C to 210°C.

Suitably in the process according to the invention, the one-part CBT system is used for the manufacture of large areas of the blade, but in particular for areas where the laminate thickness is less than 25 to 50 mm. The remaining, thicker structures are suitably processed using a combination of powder deposition and resin infusion. The powder deposition process preferably uses the one-part CBT system while the resin infusion process preferably uses the two-part CBT system. For example, the hub section of the blade may be prepared in this way.

In a preferred embodiment, the process according to the invention for the manufacture of a wind turbine blade further comprises the step of preparing a composite support means by (a) providing a first layer comprising a fibrous material and (b) adding adequate in-situ polymerisable non-fibrous thermoplastic material such as liquid, powder or pellets to said fibrous material and repeating steps (a) and (b) to form a layered composite.

The composite support means desirably comprises at least one spar web. The at least one spar web suitably comprises a composite comprising alternating layers of fibrous material and in-situ polymerisable non-fibrous thermoplastic material such as liquid, powder or pellets. The at least one spar web suitably further comprises a foam core.

Suitably the process further comprises the step of providing at least one spar cap on each of the first and second portions of the blade or blade section formed on the tool. The spar cap desirably comprises a thick unidirectional fibre laminate. The at least one spar cap is suitably provided above the spar webs in each of the first and second portions of the blade or blade section. The spar caps desirably provide the main bending stiffness and strength for the bending of the wind turbine blade. The spar caps are generally the most heavily loaded and can be critical to the strength of the blade.

The at least one spar web is desirably prepared (laid up) off line, that is, outside of the tool. At least one spar web is then placed between said first and second composite portions within the tool prior to step (vii). Suitably at least one spar web runs axially between the portions. Generally the at least one spar web will be, when considered in the tool arrangement, in a vertical orientation between the composites. Preferably, two spar webs are provided between the portions. The spar webs desirably support the spar caps, which are located on the upper and lower inner surfaces of the blade. The major loading on the spar webs is in shear. The at least one spar web acts as a support to prevent the spar caps on each of said first and second composite portions from collapsing in on top of each other.

The process according to a preferred embodiment of the invention suitably further comprises the step of including a solid foam core material in each of said first and second portions of the article. The foam core suitably comprises a solid piece of material of very low density.

The process according to the invention allows the blade to be manufactured in a one-stage process whereby the blade halves, spar webs and spar caps are pre-assembled in the tool prior to processing, such that following processing a one-piece blade is produced.

Large wind turbine blades have now reached lengths of 50 to 60 metres, and it is economically advantageous to be able to use the largest blades possible, as the power generated increases as the square of the length of the blade. One of the major problems facing the wind industry at present is the transport of these very long blades, particularly with wind turbines located on land, where the normal everyday road network is to be used to transport blades of 50 metres length and longer. The manufacture of a one-piece blade represents both a major cost saving and a weight reduction over the traditional method of manufacturing a blade in at least two sections and subsequently bonding the sections together with an adhesive.

The skilled person will appreciate that in the case of very large blades, it would be advantageous to have a thermoplastic composite blade, built in two or more sections, for example, an inboard section and an outboard section. For example each section could be up to 40 metres or so in length. Due to the weldability of thermoplastic composites, the sections could be welded together on site. In the example this would give a welded blade length of 80 metres. Obviously longer blades may be constructed in this way.

Furthermore, the shorter manufacturing cycle achieved yields substantial cost benefits over thermoset composite blades.

In a particularly preferred embodiment the invention provides a wind turbine blade manufactured according to the process described herein. The resulting, fully polymerised PBT wind turbine blade structure is a thermoplastic composite structure, and thus can be reformed and recycled like any other thermoplastic composite.

Suitably the wind turbine blade obtained by the process according to the invention is re-workable. This provides a significant advantage in that unsatisfactory blades can be re-processed and repaired. The blade can be melted and re-shaped. The potential to rework faulty blades provides for a significant reduction in scrap rates and is therefore highly desirable. Furthermore, any scrap PBT composite materials generated during the manufacturing process can be used.

The blade according to the invention can be recycled. The recyclability of thermoplastics provides a major environmental benefit. Currently, scrapped and obsolete thermoset blades are disposed of through landfill or through incineration. Scrapped thermoplastic composite material could be shredded, using existing technology and re-moulded in injection moulded or extruded thermoplastic products, rather than having to be landfilled or incinerated. The potential for the reuse of waste materials in the manufacture of alternative composite components is a major environmental benefit and avoids major waste disposal problems in the future.

It will be appreciated that the process according to the invention can be used to manufacture composite one-piece blades or sections of blades.

### Brief Description of Drawings:

The invention is described in more detail below by way of example with reference to the accompanying drawings in which:
Fig. 1 (a), (b), (c) is a diagrammatic representation of the types of interface joints which may be used ((a) and (b)) and the direction of resin impregnation;
Fig. 2 shows a cross section of a part of a wind turbine blade obtainable by the process according to the invention;
Fig. 3 shows a cross section of a lower portion of the wind turbine blade showing the preparation of a lay-up support in the tool;
Fig. 4 shows a cross section of a lay-up of the lower portion of the wind turbine blade in the tool including a spar cap;
Fig. 5 shows a cross section of a lay-up for preparation of a spar web;
Fig. 6 shows a cross section of the lower portion of the wind turbine blade section arranged in a tool showing the arrangement of the supports, lower spar cap and spar web;
Fig. 7 shows a cross section of the lower portion of the wind turbine blade section in the tool showing the arrangement of the supports, spar webs and lower spar cap;
Fig. 8 shows a cross section of the lay-up of the lower portion of the wind turbine blade section in the tool showing the complete arrangement of the supports and the spar webs;
Fig. 9 shows a cross section of the lay-up of the upper and lower portions of the wind turbine blade section in the tool;
Fig. 10 shows a cross section of the lay-up of the upper and lower portions of the wind turbine blade when the tool is closed; and
Fig. 11 is a perspective view of a wind turbine blade obtainable by the process according to the present invention.

### Detailed Description of the Invention

The invention provides a single cure cycle, (one-shot) process for the manufacture of large structural composite elements. The invention is described with reference to the manufacture of a large wind turbine blade or a part thereof but it will be appreciated that the invention is not limited to wind turbine blades and other articles constructed of composite may be made.

The advantage of the process described herein is that the most suitable processes are used for the most suitable areas of the blade. Rather than face the problem of liquid infusing very long, very large area, thin sections of fibre preform with a hot activated 2-part system CBT melt, the material is placed locally between the fibre layer using the one-part CBT system, when the blade is being laid up at room temperature. In the thicker sections, rather than face the possibility of insufficient polymerisation in the laminate interiors and the high debulk problems, the reinforcement is laid up without any CBT powder and the two-part melt system is used to infiltrate these areas once the mould and fibre preform has reached processing temperature.

The manufacture of CBT composite components with complex shapes can present problems for either the known VARTM (Vacuum Assisted Resin Transfer Moulding) process or the prepreg layup process. It can happen that some sections of the component can be amenable to the VARTM process while other sections are amenable to the placement of the one-part CBT within the reinforcement during the layup process. The present invention addresses this issue by providing a method in which both processes are used concurrently to manufacture such a component in one processing cycle.

The main obstacle to the economic manufacturing of a large thermoplastic composite wind turbine blade is that the flow viscosity of most thermoplastic polymers is very high, in comparison to the viscosity of uncured thermoset resins. Thermoplastic polymers with desirable mechanical properties such as polybutylene terephthalate (PBT), polyethylene terephthalate (PET), polyamide-6 (PA-6), polyamide-12 (PA-12), polyamide-6,6 (PA-6,6) and also polyether etherketone (PEEK), polyetherketoneketone (PEKK) and polyphenylene sulphide (PPS), have flow viscosities several orders of magnitude larger than uncured epoxy, polyester or vinylester resins.

In general, a flow viscosity of 1.0 Pa.sec or lower is required in order for a polymer resin to easily infiltrate a fibre reinforcement preform under vacuum pressure only. The difficulty of infiltration is directly related to the resulting fibre volume fraction of the laminate. Thus it is more difficult to process a 60% fibre volume fraction laminate than a 50% volume fraction laminate. It is more advantageous to use a polymer resin with a flow viscosity as low as possible, as this aids the infiltration, as well as flow over large distances and results generally in less voids and air inclusions in the final laminate.

Thermoplastic polymers such as those listed above can have melt viscosities between 100 Pa.sec and 500 Pa.sec or even higher, depending on the temperature that the material is being processed at. In contrast, uncured thermoset resins such as polyester and epoxy have flow viscosities less than 1.0 Pa.sec, which is sufficient to allow the infiltration of fibre preforms under vacuum pressure, as would be necessary for large wind turbine blades. Of course, it is well-known to use higher consolidation pressures by means of a mechanical press or high-pressure autoclave, which enables the efficient manufacturing of thermoplastic composite laminates. This approach is not, however, practical for the production of large wind turbine blades, due to the large dimensions of the structures involved, and the consequent capital cost of presses or autoclaves of this size.

An important consideration in the manufacture of large wind turbine blades from thermoplastic composites is the higher temperatures at which most useful thermoplastic polymers must be processed. The most desirable polymers, in terms of mechanical performance and reasonable cost are the semi-crystalline engineering thermoplastics such as PBT, PET, PA-6, PA-12 and PA-6,6. However, the melt temperatures of all of these thermoplastic polymers are above 220°C, which means that the composites would have to be processed above this temperature. This contrasts with the existing processing temperatures for polyester and vinylester resins of up to 100°C, and of epoxy resins of up to 150°C.

Developments in both large high temperature tooling and thermoplastic processing systems have enabled the present invention to address the possibility of manufacturing a thermoplastic composite wind turbine blade.

The most important development has been in the area of in-situ polymerised thermoplastic polymers. These are largely semi-crystalline engineering thermoplastics such as PA-6, PA-12 and PBT. Technologies have been developed which enables the use of the monomer, or oligomer precursors of these polymers in the moulding of composite structures, rather than using the polymer form itself. The main advantage of this approach is that the viscosity of the pre-polymer (either monomer or oligomer) material is sufficiently low to enable relatively easy infiltration of composite preforms with high fibre volume fractions.

Once the pre-polymer material has been infiltrated into the fibre preform, a combination of heat and time allows a polymerisation reaction to take place in the composite, which yields a fully-polymerised semi-crystalline polymer composite. A catalyst system is required in order to initiate and drive this polymerisation reaction. The catalyst can be added directly before the injection of the pre-polymer, or in one case, can be pre-mixed with the pre-polymer and then stored in solid form.

The pre-polymers used in the present invention suitably comprise in-situ polymerised materials. One such in-situ polymerised material is a form of PA-12, which is available in an activated monomer form known as Anionically Polymerised Lactam-12 (APLC-12). This material is available from Ems-Chemie AG in Switzerland. The monomer material is known as lactam-12 or laurolactam, the pre-polymer of PA-12. The system involves the heating of the pre-polymer under certain conditions, the addition of a suitable catalyst, and the infiltration of the pre-activated melt into suitable fibre reinforcements. At certain mould temperature and pressure, it is possible to cause the pre-polymer to polymerise to form PA-12. Cooling of the mould then causes crystallisation and solidification of the PA-12 composite with carbon fibre reinforcement. The details of this process have been widely published ^{1,2,3.}

Percentages of lactam-6 or caprolactam, which is the pre-polymer of PA-6, varying from 0% to 100% with the anionic catalyst of Ems-Chemie, can also be used to produce an in-situ polymerised PA-6 / PA-12 polymer alloy, and to produce carbon fibre composites using this process⁴.

It is also known to use the activation system known as NYRIM (Nylon Reinforced Injection Moulding) from Bruegemann GmbH, to anionically polymerise caprolactam melts and to produce glass fibre PA-6 composites ^{5,6.}

However, the preferred material system for the present invention is the CBT material system. This material is an activated macrocyclic polyester oligomer, which when polymerised forms a PBT polymer, described in many patents of Cyclics Corporation, including US patent no. 6,369,157 B1.

The CBT system has a useful feature in that it can be caused to polymerise at temperatures around 190 to 210°C. Once it polymerises, however, it is then a polymer melt of PBT, whose melting temperature is somewhat higher, at approximately 240°C. This causes the polymer melt to start to crystallise at the lower temperature, and to eventually solidify. The advantage here is that the component may be removed from the mould at an elevated temperature, as high as 150°C.

CBT can be processed in two main ways. The first is known as the two-part system, and involves heating the oligomer to temperatures in the range of 150 to 160°C, at which point the oligomer melts to form a low viscosity liquid. At this point a suitable catalyst may be added (such as titanate, for example) which initiates the polymerisation reaction.

The activated melt has a viscosity profile which increases with time and temperature, but which in any case can remain below the indicative figure of 1.0 Pa.sec for sufficient time to enable the melt to be infiltrated into a fibre reinforcement preform in a heated mould in a satisfactory manner. The process of infiltration of the activated pre-polymer melt into the preform is essentially no different from the liquid resin infusion processes described herein for uncured thermoset resins. Once infiltration has been completely achieved, a combination of temperature and time is required to cause the material to polymerise in-situ.

A major advantage of the CBT macrocylic polyester oligomer system is that the polymerisation reaction is not exothermic. This means that it is possible to process thick sections of fibre reinforced laminates without any problems of heat build-up in the interiors of the laminates, as are experienced in processing of all thermoset structures. This presents a major commercial advantage in that it should be possible to process large wind turbine blades from CBT in a fraction of the time currently required at present to process thermoset blades, and without encountering any of the exotherm-related problems described above. Glass reinforced CBT laminates over 100mm thick have been produced in cycle times less than 3 hours. Similarly, 100mm thick laminates with large diameter metal bolt inserts have been manufactured successfully.

The second way to process the macrocyclic polyester oligomer material is described in US Patent No. 6,369,157 B1, in which the catalyst is combined in an earlier step to form a single-part solid system, which can be provided in pellet or powder form. The advantage of this one-part system is that there is no need to carry out the mixing step described above in the two-part system. Furthermore, the powder or pellets can be distributed at room temperature on top of, or between layers of the fibre reinforcement prior to the composite laminate being heated up.

Alternatively, a preliminary step can be used to manufacture a type of pre-impregnated CBT fabric or tape in which the one-part system has been attached to the fibres by means of heating and cooling, without allowing sufficient time for the polymerisation reaction to occur. The resulting layup of fibre and one-part CBT material is simply vacuum-bagged on a suitable tool and heated. The one-part system will melt at temperatures in the region of 180 to 200 °C, and will have a low enough viscosity which enables it to fully impregnate the fibre reinforcement, before the polymerisation reaction starts.

The main advantage of the one-part CBT system for the present invention is that the one-part material can be pre-placed or pre-deposited on the fibre reinforcement in the form of pellets, powder granules or as a pre-impregnated fabric or tape. This means that it is not necessary to use liquid resin infusion techniques to cause large volumes of pre-polymer melt to infiltrate fibre preforms of long lengths and large areas, as would be required in a large wind turbine blade.

A large wind turbine blade of between 40 and 50 metres length can weigh between 10 and 15 tonnes in total, with approximately one third of this weight being made up by the polymer matrix material or resin. The practical and economic problems of melting up to 5 tonnes or more of an activated thermoplastic pre-polymer material and causing it to flow through a fibre preform which could have an area of several hundred square metres are not insignificant. The problem is made more difficult as the activated pre-polymer material must be kept above a certain temperature during infiltration, but must be infiltrated fully into the preform within the allowable process window of the material. This process window is the time at which the viscosity remains low enough to flow through a fibre preform. The ongoing polymerisation reaction will at some stage cause the viscosity to rise above the upper limit for infiltration of the preform, and the filling of the preform needs to be finished before then.

There are some problems with the processing of the one-part CBT system, however, the most significant of which has been reported by Winckler⁷. In heating the one part system from room temperature to its processing temperature of 190 to 210°C, it is necessary to achieve a certain minimum heating rate throughout the material. There are competing mechanisms of polymerisation and crystallisation in the material. Too low a heating rate in the one-part system can cause the material to crystallise as a macrocyclic polyester oligomer, in which case the polymerisation process will be impeded. This will lead to poor mechanical properties in the material. Winckler estimates that a minimum heating rate of 10°C per minute in the temperature range between 120 and 190°C is the minimum heating rate which is need to fully polymerise the material.

For example, if a thick section, for example, a section of about 100mm, of alternating layers of one-part CBT powder and glass fibre reinforcement is heated from both surfaces, it is possible that the interior of the layup may not heat up at sufficient rates in order to fully polymerise the CBT ⁸. This is a possibility where very thick sections of a wind turbine blade, for example the hub section which could be between 100mm and 150 mm in thickness, are being processed using the one-part CBT system.

It will be appreciated by the skilled person that a second problem with processing thick sections of composite laminates using the one-part CBT system is that there is significant thickness reduction involved once the powder or pellets of the CBT system melt and start to infiltrate the fibre preforms. This can be particularly problematic if processing a circular section which is composed of a thick laminate, such as that in the circular hub section of a large wind turbine blade. It may be extremely difficult to lay up sufficient fibre in the circular section, and to maintain accurate fibre orientation as the thick circular section debulks.

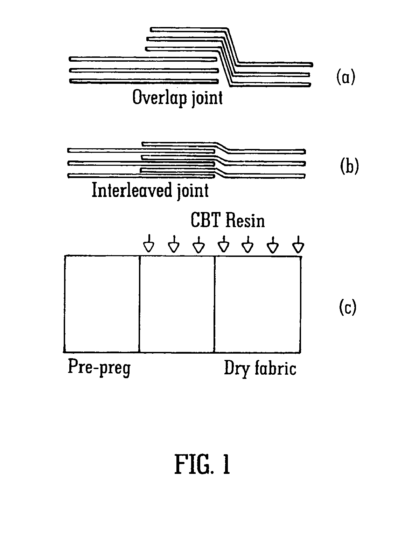

In the development of this invention, two types of interface between a VARTM (Vacuum Assisted Resin Transfer Moulding) section and a prepreg section were examined. As shown in Figure 1, the first was an overlap joint (a) and the second was an interleaved joint (b). The first step in the integration of these two processes into a single process cycle was to lay both the prepreg material and the fibre preform onto the appropriate locations on the tool. The tool was heated and when processing temperature was reached, the CBT resin was infused into the dry fibre preform. When infusion was complete, the part was held at temperatures between 190°C and 210°C to facilitate polymerisation of the CBT resin. After cooling the integrated part was removed from the tool.

The ease of handling of the one-part CBT system, and the use of the hybrid processing route involving the integration of the prepreg process and VARTM process gives sufficient flexibility to allow the manufacturing of the entire wind turbine blade in a single component and a single operation. As will be described in detail below, the low viscosity of the CBT system enables processing steps to be taken to mould entire blade sections in a single shot.

The very low, almost water-like viscosity of the CBT system also means that higher than normal fibre volume fractions can be reliably achieved using only vacuum pressure for flow and consolidation. Glass fibre laminates of thicknesses of up to 100mm, with fibre volume fractions of 60% have been repeatedly produced showing extremely low void contents in the resulting laminate. This means that it may be possible to increase the percentage of glass fibre being used in wind turbine blades, giving higher stiffness and strength, and thereby enabling the construction of lighter weight turbine blades.

### Example

The following example demonstrates the manufacture of a section of a CBT thermoplastic composite wind turbine blade. It will be appreciated that the process described can also be used to manufacture a whole thermoplastic composite wind turbine blade in a one-shot process. The skilled person will appreciate that blades or blade sections of various sizes could be manufactured using the process according to the invention.

To demonstrate the process of manufacturing a glass reinforced CBT wind turbine blade, a 4 metre long centre section of a 12.6m blade was produced. The centre section was manufactured on a high temperature composite tool. This demonstration shows the process that can be used for the entire blade, of any size in length. The following stages were involved in the production of the blade section:
- Material Preparation
- Tool preparation
- Lay-up support
- Materiallay-up
- Heating cycle

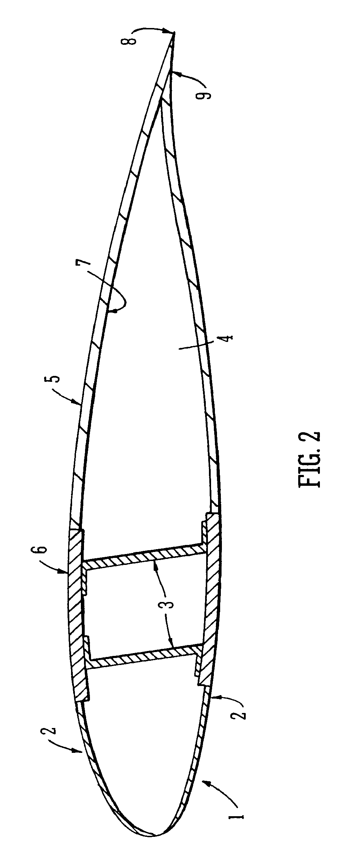

Figure 2 shows a cross section of a blade section obtainable by the process according to the invention. As shown in Figure 2, the basic design of the blade section 1 comprises two (concave) shell portions or halves 2 which overfit with the concave surfaces facing each other. A structural support comprising a box beam spar comprising two spar webs 3 is provided in the cavity 4 between the two fitted together halves 2. The box beam spar has a double Z-web construction. In the embodiment shown, the skins 5 of blade halves 2 comprise a lay-up of glass fibre and CBT powder. The ±45° fibre-reinforced skins 5 take the torsion loads. The blade section is provided with spar caps 6. The spar caps 6 carry the flap-wise bending loads, i.e. the loads in bending towards the tower. Foam core 7 is provided between the layers of the skins 5 to increase resistance to buckling. The spar caps are made from a thick unidirectional fibre laminate comprising alternating layers of glass fibre and CBT powder, whereas the spar webs 3 are made from +/-45° fibre skins on a foam core. Unidirectional plies 8 are also employed at the trailing edge 9 of the blade to further increase edgewise bending stiffness. The thickness of lay-up and foam are greater towards the root end and reduce along the length of the blade. The blade 1 is also provided with a hub section which connects to the hub and comprises a monolithic laminate.

### Material Preparation:

In the embodiment described, the blade section is made up of the following raw materials:
CBT 160 powder supplied by Cyclics Corporation
   0°/90° glass fibre with an areal weight of 1152g/m², supplied by Ahlstrom Glassfibre +/-45° glass fibre with an areal weight of 600g/m², supplied by Ahlstrom Glassfibre PET foam from Fagerdala Hicore, density of 110kg/m³

Table 1 provides details of the material lay up for the centre section.

**Table 1.**

| | **Root end (mm)** | **Tip end (mm)** | **Material** |
|---|---|---|---|
| Skins | 7 | 3.4 | +/- 45⁰ glass |
| Spar caps | 10.8 | 10 | 0⁰/90⁰ glass |
| Spar | 3 | 3 | +/- 45⁰ glass |
| Foam spar | 10 | 10 | PET |
| Foam skins | 15 | 10 | PET |

In the embodiment described herein by way of example, approximately fourteen layers of +/-45⁰ glass fibre were needed to prepare the skins at the root end of the blade section. Approximately seven layers of glass fibre were required towards the tip end of the blade section. For the lower half of the blade the skins were extended approximately 100mm on each side to allow for overlaps. The spar caps required eleven layers of glass fibre at the root end and ten layers towards the tip end. The PET foam was cut for both webs (spars) and for the skins.

When all glass fibre kits have been prepared the total weight of glass must be measured to establish the amount of CBT resin required. For example, for a 50%Vf (fibre volume fraction), half the weight of glass in powder should be added.

### Lay-up support:

The process according to the invention enables a blade section to be processed in a single shot. A lay-up comprising layers of glass fibre, CBT resin and foam was prepared.

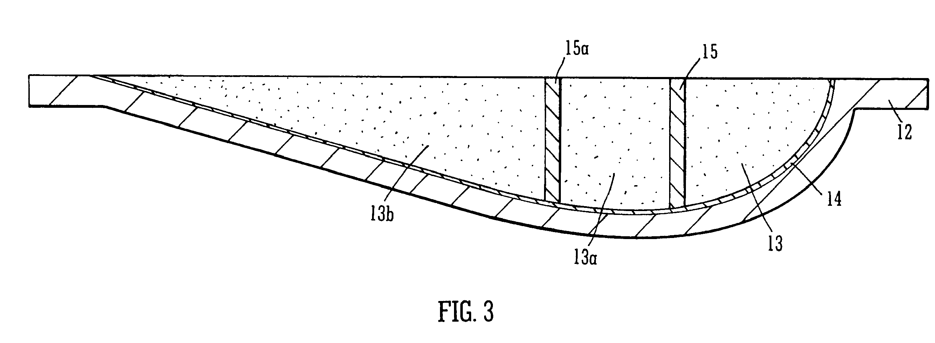

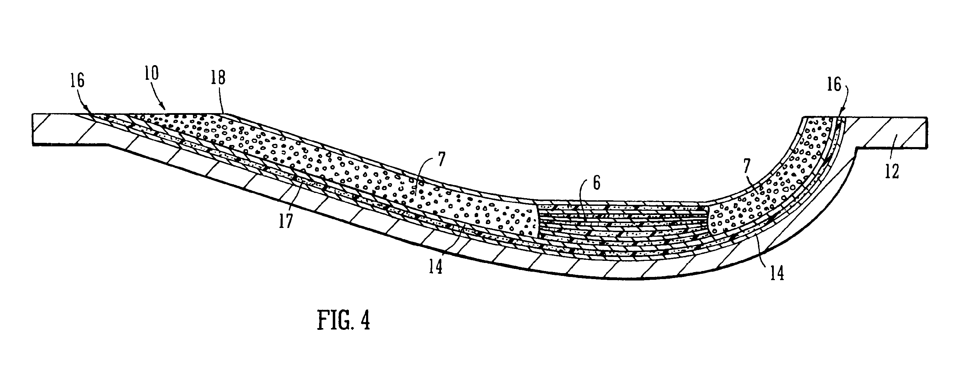

With reference to Figures 3 and 4, the invention provides a method to support the lay-up 10 on the tool 12 before the vacuum is applied. With reference to Figure 3, a support for the lower half of the blade section was created by placing nylon film tubes 13, 13a, 13b into the profile of the tool 12. The tubes 13, 13a, 13b were filled with plastic powder or a suitable granular material and a vacuum was pulled to maintain the profile.

The first step involved in constructing the blade lay-up was to place glass fibre 14 into the lower half of the tool 12. The amount of glass fibre used determines the thickness of the lay-up. The next step involved the preparation of replicas of the spars 15,15a. In the embodiment shown, wood or a similar material was used to reproduce the thickness and position of the spars on the tool 12. Three nylon tubes 13, 13a, 13b were then placed in the tool 12 as shown in Figure 3. One tube 13a is positioned between the two spar replicas 15, 15a and the remaining two tubes 13, 13b were positioned each side of the spar replicas 15,15a.

The same procedure was carried out to prepare a support for the upper half of the tool. The skilled person will appreciate that a support can be provided using various different materials such as polystyrene blocks for example.

### Material lay-up

Figure 4 shows the arrangement of the lay-up 10 in the lower half of the tool 12. The glass lay-up 10 forming the outer skin was first prepared in the lower half of the tool. The first layer of +/- 45⁰ glass 14 was weighed and placed into position on the tool 12 as shown in Figure 4. The glass fibre 14 should extend 100mm beyond the flange line 16. Half the weight of the glass fibre in powder was weighed out and dispersed evenly over the entire glass surface providing a layer 17 of powder. The procedure was repeated until the outer skin lay-up 10 was complete. Foam 7 was then positioned on the skin lay-up 10. The spar caps 6 were placed on the lay-up 10. An inner skin layer 18 comprising glass fibre was then laid into the tool 10 over the foam layer 7.

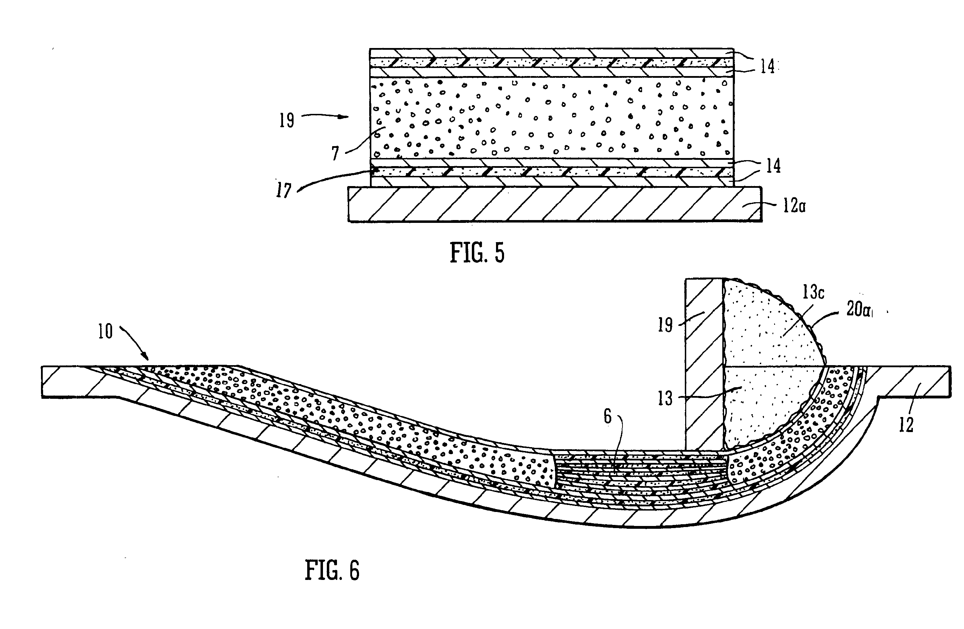

Two spar webs 19,19a were then prepared. With reference to Figure 5 glass fibre 14 was laid up off line (on a separate tool 12a) on each side of the foam 7 along with suitable amounts of powder 17. With reference to Fig. 6, the upper and lower supports (nylon tubes) 13, 13c were placed at the leading edge into a vacuum bag tube 20a 1.5m wide and placed onto the tool 12. The support 13c from the upper portion of the tool was placed over the lower support 13. The first spar web 19 was aligned alongside.

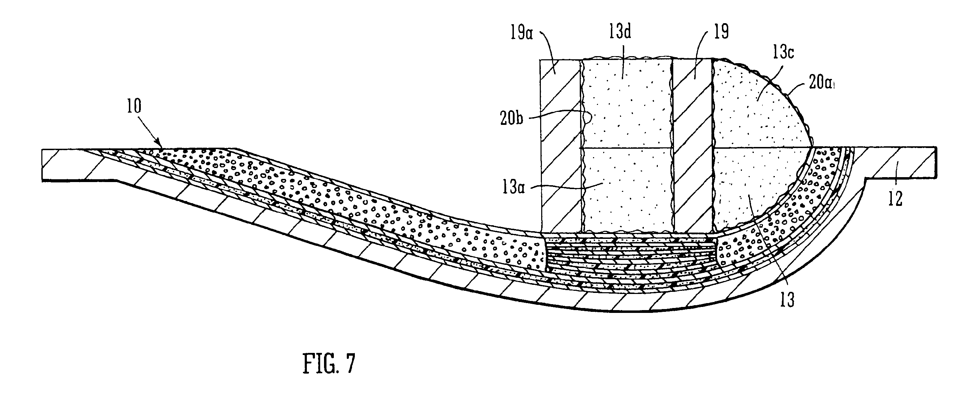

As shown in Figure 7, the centre support 13a was placed into the tool 12 together with the upper centre support 13d and the second spar web 19a was aligned alongside. The supports 13,13c and 13a, 13d were enclosed in vacuum bags 20a and 20b respectively.

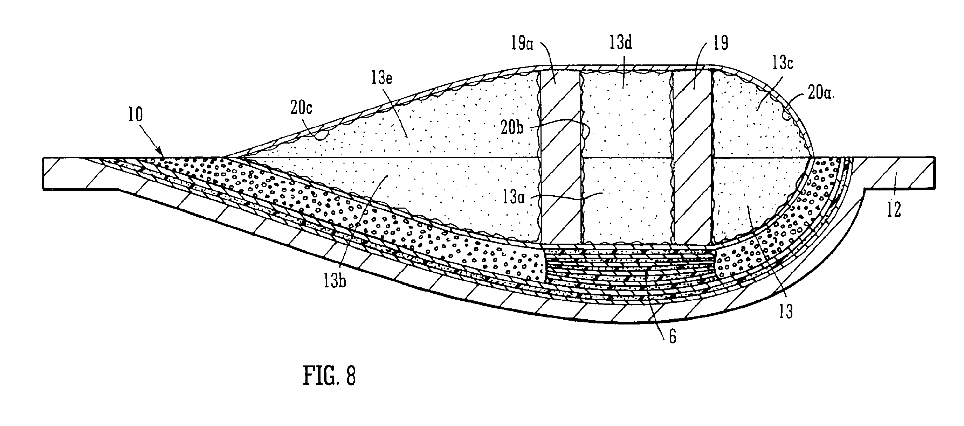

As shown in Figure 8, the third complete support 13b,13e was placed into the tool 12 in a similar manner to that described above with reference to the centre supports 13a, 13d. The lower half of the lay-up 10 and supports 13, 13a, 13b, 13c, 13d, 13e were then complete.

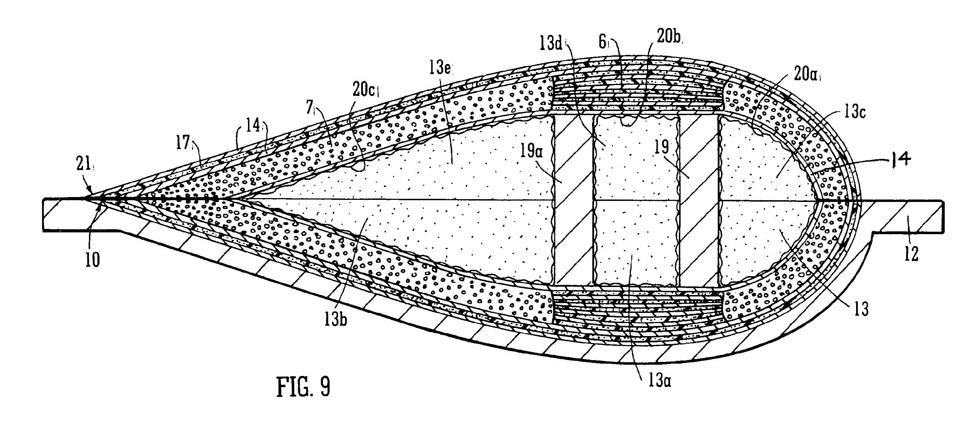

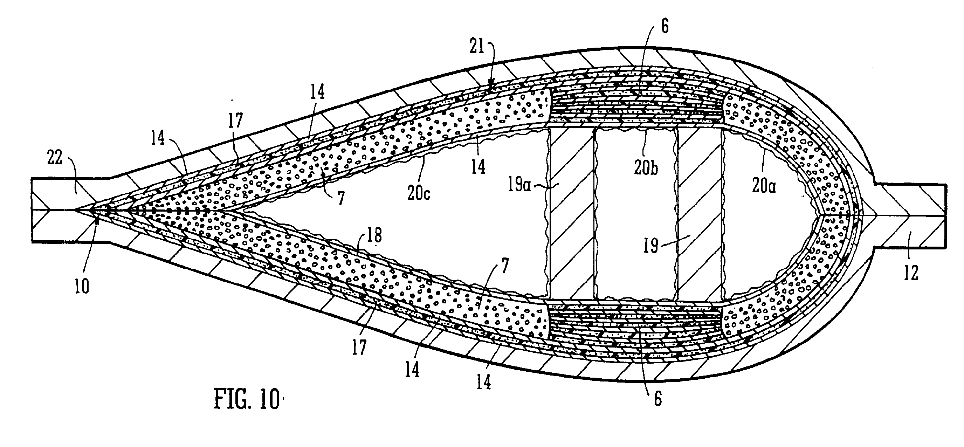

With reference to Figures 9 and 10, the lay-up 21 of the top half 22 of the tool 12 was prepared in reverse order to that described above for the lay-up 10 of the lower half of the tool 12. As shown in Fig. 9, the first layer of the lay-up 21 forming the inner skin comprises a layer of glass fibre 14 which was laid up over the supports 13, 13a, 13b, 13c, 13d, 13e. The upper layers of the lay-up 21 were overlapped with the lower skins of the lay-up 10 to maximize the joint strength. The remaining layers 14, 7, 17 were laid up in opposite order to those of the lay-up 10 of the first half of the tool. With reference to Figures 9 and 10, the complete lay-up comprises three sections comprising three sets of supports 13, 13c; 13a, 13d; and 13b, 13e, each enclosed in a vacuum bags 20a, 20b and 20c respectively.

The three vacuum bags 20a, 20b and 20c were joined together at the ends and sealed to the tool 12. A vacuum was applied. The system was checked to ensure that there were no leaks. With reference to Fig. 10, the nylon tube supports 13, 13a, 13b, 13c, 13d, 13e were removed from the tool 12. The lay-up was then ready for processing.

### Heating Cycle:

A combination of tool heating and internal air heating was used to heat the entire layup to an appropriate temperature. The preferred temperature is in the range 170 °C to 210 °C.

When the material was fully polymerised, the structure was allowed to cool at an appropriate rate so as to ensure structural integrity.

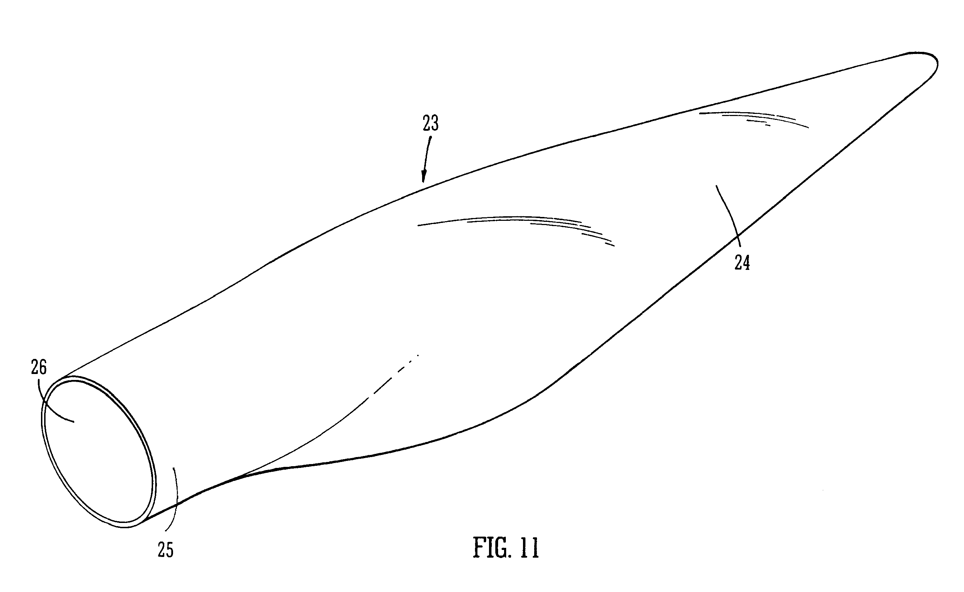

Fig. 11 shows a perspective view of a wind turbine blade obtainable by the process according to the invention. The invention provides a hybrid approach to the processing of a large structure such as a wind turbine blade. The blade 23 is composed of large area flat sections 24 as well as thick monolithic laminates such as are seen in the hub 25 and thicker spar cap areas 26 of the blade. As described above, the one-part CBT system is laid up in the large flat areas 24 of the blade, or in as much of the blade as is possible to fully polymerise using this material. The thicker sections of the blade such as the hub 25 and thicker sections of the spar can be laid up using reinforcement fibre (fibre perform) only. Liquid resin infusion techniques (such as VARTM) are then used with the two-part CBT system to infiltrate the thicker sections of the blade. In the process according to the invention both melt fronts can simultaneously infiltrate the preform and meet up at the interface formed between the glass fibre lay-up and the fibre preform to form a fully infiltrated and polymerised structure.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

### REFERENCES:

1. Connor, M., Eder, R., & Wild, U.,"EMS Polymerisation Moulding (EPM): a Novel Solution to Thermoplastic Composite Manufacturing". In: Proceedings of SAMPE Europe Conference, Paris, April 1998.
2. Ó Máirtín, P., McDonnell, P., Connor, M., Eder, R. and Ó Brádaigh, C.M., "Process Investigation of a Liquid PA-12/Carbon Fibre Moulding System", Composites: Part A, Vol. 32 , pp. 915-923 , 2001.
3. Michaud V, Zingraff L, Verrey J, Bourban P-E, Månson J-AE. "Resin Transfer Molding ofAnionically Polymerized Polyamide 12". In: Proceedings of 7th International Conference on Flow Processes in Composite Materials (FPCM-7) Conference, University of Delaware, Newark, USA, July 7th to 9 th. 2004.
4. Greaney, M. and Ó Brádaigh, C.M., "Development of a Polyamide Copolymer Resin Transfer Moulding System for Thermoplastic Composites" In: Proceedings of 7th International Conference on 'Flow Processes in Composite Materials', University of Delaware, Newark, USA, July 2004.
5. Van Rijswijk K, Koppes K, Bersee HEN, Beukers A. "Processing Window for Vacuum Infusion ofFiber-Reinforced Anionic Polyamide-6". In: Proceedings of 7th International Conference on Flow Processes in Composite Materials (FPCM-7) Conference, University of Delaware, Newark, USA, July 2004.
6. Van Rijswijk K, Vlasveld DPN, Bersee HEN, Picken SJ. "Vacuum Injection of Anionic Polyamide 6 ". In: Proceedings of 4th International Conference on Composite Structures and Technology (ICCST-4) Conference. Durban, South Africa, January 2003.
7. Steven J. Winckler, "Processing Thermoplastic, Resin Film Infusion Materials, based on Cyclic Butylene Terephthalate ". In: Proceedings of the 23rd SAMPE Europe International Conference, Paris Expo, SAMPE 2003
8. Coll, S.M., Murtagh, A.M. and Ó Brádaigh, C.M., "Resin Film Infusion of Cyclic PBT Composites: A Fundamental Study", In: Proceedings of the SAMPE Europe 25th International Jubilee Conference, Paris, France, April 2004.

## Claims

1. A process for the manufacture of a composite article, said process comprising the steps of
(i) providing on a tool a fibrous material having associated therewith in at least one region thereof an in-situ polymerisable non-fibrous form of a thermoplastic material;
(ii) applying heat and a vacuum to said material; and additionally
(iii) drawing into the fibrous material, from a source external to the tool, additional thermoplastic pre-polymer material.

2. A process according to claim 1 wherein the non-fibrous form of a thermoplastic material is dispersed on the fibrous material.

3. A process according to claim 1 or 2 wherein the material used in step (iii) comprises an in-situ polymerisable thermoplastic material.

4. A process according to any one of claims 1 to 3 wherein the in-situ polymerisable non-fibrous form of thermoplastic material comprises liquid, powder or pellets.

5. A process according to any one of claims 1 to 4 wherein the in-situ polymerisable thermoplastic material is selected from the group consisting of pre-polymers of:
polybutylene terephthalate (PBT), polyamide-6 (PA-6), polyamide-12 (PA-12), alloys of polyamide-6 and polyamide-12, polyurethanes (TPU), polymethylmethacrylate (PMMA), polyethylene terephthalate (PET), polycarbonate (PC), polyetheretherketone (PEEK), polyetherketone (PEK), polyethersulfone (PES), polyphenylenesulphide (PPS), polyethylenenaphthalate (PEN) and polybutylenenaphthalate (PBN) and/or combinations thereof.

6. A process according to claim 5 wherein the in-situ polymerisable thermoplastic material comprises cyclic poly(1,4-butylene terephthalate) (CBT).

7. A process according to claim 6 wherein the in-situ polymerisable thermoplastic material used in step (i) comprises a one-part CBT system and in step (iii) comprises a two-part CBT system.

8. A process according to claim 7 wherein the resin of the two-part CBT system is heated to a temperature suitable to allow infusion of the two-part system into the fibrous material, prior to drawing it into said fibrous material.

9. A process according to any one of claims 1 to 8 wherein said fibrous material comprises a first portion and a second portion.

10. A process according to claim 9 wherein said first portion comprises a pre-impregnated fibrous material.

11. A process according to claim 9 or 10 wherein said second portion comprises a fibre preform.

12. A process according to any preceding claim, for the manufacture of a composite article such as a wind-turbine blade, the process comprising the steps of
(i) providing a tool for forming a first and second portion of the article;
(ii) providing a first layer comprising fibrous material on the tool;
(iii) adding in-situ polymerisable non-fibrous thermoplastic material as appropriate to said fibrous material and optionally repeating steps (ii) and (iii) to build up a desired lay-up of said first portion of the article;
(iv) providing a fibre preform adjacent said fibrous material;
(v) repeating steps (ii) to (iv) to form a desired lay-up of said second portion of said article;
(vi)placing the lay-up of said first portion of the article adjacent to the lay-up of the second portion of said article;
(vii) applying heat and a vacuum to said tool; and additionally drawing into the fibrous material, from a source external to the tool, additional thermoplastic pre-polymer material; and
(viii) maintaining sufficient heat and vacuum in said tool for a period of time sufficient to form a composite article.

13. A process according to claim 12 further comprising the step of cooling the tool and composite components in a controlled manner.

14. A process according to claim 12 or 13 further comprising the step of encapsulating said first and second portions in a vacuum bag prior to applying heat and a vacuum to said tool.

15. A process according to any one of claims 1 to 14 wherein the tool is heated to a temperature in the range 170-450°C.

16. A process according to any one of claims 10-15 wherein the fibrous material comprises glass fibre, basalt fibre, carbon fibre or metal fibre.

17. A process according to claim 16 wherein the fibrous material comprises glass fibre.

18. A process according to any one of claims 11 to 17 wherein the fibre preform comprises comprises glass, basalt, carbon or metal fibre.

19. A process according to claim 17 or 18 wherein the one-part CBT powder is dispersed on the glass fibre in an amount effective to yield fibre volume fractions between 20% and 70%.

20. A process according to any one of claims 12 to 19, further comprising the step of preparing at least one composite support means by means of (a) providing a first layer comprising a fibrous material and (b) adding adequate in-situ polymerisable non-fibrous thermoplastic material such as liquid, powder or pellets to said fibrous material and repeating steps (a) and (b) to form a layered composite.

21. A process according to claim 20 wherein the composite support means comprises at least one spar web.

22. A process according to claim 21 wherein said at least one spar web is placed between said first and second portions on said upper and lower portions of the tool prior to step (vii).

23. A process according to any one of claims 12 to 22 further comprising the step of providing a foam core material in each of said first and second portions of the article.

24. A wind-turbine blade obtainable by the process according to any one of claims 12 to 24.

25. A wind turbine blade according to claim 24 which is recyclable.

26. A composite article obtained by the process according to any one of claims 1 to 11.
